# EUROPÄISCHE PATENTANMELDUNG

(11) **EP 4 756 559 A1**
(43) Veröffentlichungstag der Anmeldung: **10.06.2026**
(21) Anmeldenummer: 25214821.8
(22) Anmeldetag: 11.11.2025
(51) Int. Cl.: G05D 1/633, G05D 1/243, B66F 9/06, G05D 101/15, G05D 101/20, G05D 105/28, G05D 107/70, G05D 109/10, G05D 111/10

(54) **VORRICHTUNG UND SYSTEM ZUM STEUERN VON TRANSPORTROBOTERN**

(30) Priorität: 09.12.2024 DE 102024136638
(71) Anmelder: STILL GmbH, 22113 Hamburg (DE)
(72) Erfinder: Hinckeldeyn, Johannes, 22303 Hamburg (DE); Lategahn, Julian, 44141 Dortmund (DE)
(74) Vertreter: Patentship Patentanwaltgesellschaft

(57) **Zusammenfassung**

Die Erfindung betrifft eine Datenverarbeitungsvorrichtung (110) zum Steuern eines Transportroboters (120a,b), insbesondere Flurförderzeugs (120a,b). Die Datenverarbeitungsvorrichtung (110) umfasst eine Kommunikationsschnittstelle (113), welche ausgebildet ist, eine Vielzahl von Sensordaten zu empfangen, welche Informationen über die aktuelle Umgebung des Transportroboters (120a,b) enthalten. Ferner umfasst die Datenverarbeitungsvorrichtung (110) eine Prozessoreinrichtung (111), welche ausgebildet ist, auf der Grundlage der Vielzahl Sensordaten ein semantisches Modell der aktuellen Umgebung des Transportroboters (120a,b) zu bestimmen. Die Prozessoreinrichtung (111) ist ferner ausgebildet, auf der Grundlage eines Arbeitsauftrags für den Transportroboter (120a,b) und auf der Grundlage des semantischen Modells der aktuellen Umgebung des Transportroboters (120a,b), Steuersignale für den Transportroboter (120a,b) zur Durchführung des Arbeitsauftrags zu erzeugen.

## Beschreibung

Die Erfindung betrifft eine Vorrichtung und ein System zum automatisierten Steuern von Transportrobotern, insbesondere von zumindest teilautomatisierten Flurförderzeugen, in der Intralogistik, beispielsweise in einem Warenlager.

In der Intralogistik werden für den Transport und die Lagerung von Produkten, Waren und Materialien oftmals Verpackungen und/oder Ladungsträger, beispielsweise Gitterboxen oder Paletten, insbesondere Europaletten, verwendet. Zur Handhabung derartiger Verpackungen und/oder Ladungsträger in der Intralogistik, d.h. dem innerbetrieblichen Materialfluss, z.B. in einem Warenlager, werden Transportroboter, insbesondere automatisierte Flurförderzeuge, z.B. Gabelstapler eingesetzt.

Ein Warenlager ist in der Regel ein sehr dynamisches Umfeld, in dem die teilautomatisierte oder vollautomatisierte Steuerung der mobilen Flurförderzeuge ein komplexes Problem darstellt. Dies liegt zum einen daran, dass sich automatisierte Flurförderzeuge heute nur schwierig in menschliche Arbeitsprozesse in Lagern und Fabriken integrieren lassen. Ein semantisches Szenenverständnis ist bei der Steuerung von automatisierten Flurförderzeugen in der Intralogistik nicht vorhanden. Bisher werden automatisierte Flurförderzeuge aufgrund geometrischer Umfeldinformationen wie Winkeln und Abstände gesteuert. Die Flurförderzeuge reagieren, wenn Personen und Objekte innerhalb eines gewissen Abstandes zum Flurförderzeug auftreten. Dabei wird die Szene als solche nicht interpretiert oder bewertet und fließt auch nicht in die Steuerung des Flurförderzeugs ein. Eine dynamische Anpassung der Steuerung automatisierter Flurförderzeuge auf eine gegebene Szene ist also nicht vorhanden. Automatisierte Flurförderzeuge integrieren sich deshalb nicht gut in dynamische, intralogistische Arbeitssysteme zusammen mit dem Menschen.

Ein Beispiel ist der Umgang eines automatisierten Flurförderzeugs mit Begegnungssituationen mit Menschen. In der Regel beschränkt sich in einem solchen Szenario das Verhalten des Flurförderzeugs auf Anhalten und Warten zur Freigabe des Fahrweges durch den Menschen. Eine dynamische Anpassung des Verhaltens des Flurförderzeugs an das Verhalten des Menschen findet nicht statt. Dadurch ist der Anwendungsbereich des Flurförderzeugs auf Bereiche beschränkt, in denen nur wenige Personen arbeiten bzw. auf Bereiche ohne oder mit geringen dynamischen Veränderungen. Die fehlende Integrationsfähigkeit des Flurförderzeugs führt zu einer verminderten Akzeptanz durch Menschen.

Ein weiteres Problem besteht darin, dass automatisierte Flurförderzeuge Arbeitsaufträge, z.B. Transportaufträge, erhalten, die fix definiert sind und in einem bestimmten Format an das Flurförderzeug übermittelt werden müssen. Die Arbeitsaufträge werden dabei in der Regel durch eine übergeordnete Datenverarbeitungsvorrichtung, beispielsweise einen Server, bereitgestellt, übermittelt oder ausgelöst. Die Arbeitsaufträge sind dabei in der Regel in einem festen Format definiert. Eine Definition oder Auslösung von Arbeitsaufträgen durch andere, weniger fest strukturierte Quellen und Formate, beispielsweise durch Menschen und menschliche Stimme, ist nicht möglich. Zudem werden bestehende Arbeitsaufträge nach einem festen, vordefinierten Ablauf abgearbeitet. Eine Reaktion auf Veränderungen bei der Ausführung einer Arbeitsauftrages ist dabei nicht möglich, z.B. Hinzufügen zusätzlicher Aufgaben zum Arbeitsauftrag oder Umplanung aufgrund blockierter Fahrwege. Der Ablauf der Auftragsbearbeitung ist daher sehr statisch und wenig flexibel.

Vor diesem Hintergrund liegt der vorliegenden Erfindung die Aufgabe zu Grunde, eine verbesserte Vorrichtung sowie ein verbessertes System zum automatisierten Steuern von Transportrobotern, insbesondere von zumindest teilautomatisierten Flurförderzeugen, in der Intralogistik, beispielsweise in einem Warenlager, bereitzustellen.

Diese Aufgabe wird gemäß einem ersten Aspekt der Erfindung durch eine nachstehend näher beschriebene Datenverarbeitungsvorrichtung zum Steuern von Transportrobotern, insbesondere von zumindest teilautomatisierten Flurförderzeugen, in der Intralogistik, beispielsweise in einem Warenlager gelöst. Die Datenverarbeitungsvorrichtung gemäß dem ersten Aspekt kann als eine externe Servervorrichtung ausgebildet sein, welche mit einer Vielzahl von Transportrobotern kommuniziert, oder als eine Steuervorrichtung, welche Teil eines Transportroboters ist.

Die Datenverarbeitungsvorrichtung gemäß dem ersten Aspekt umfasst eine Kommunikationsschnittstelle, welche ausgebildet ist, eine Vielzahl von Sensordaten zu empfangen, welche Informationen über die aktuelle Umgebung des Transportroboters enthalten. In einer Ausführungsform können die Sensordaten insbesondere in der Umgebung des Transportroboters erfasste Bilddaten oder Radar- bzw. Lidar-Daten umfassen.

Ferner umfasst die Datenverarbeitungsvorrichtung gemäß dem ersten Aspekt eine Prozessoreinrichtung, welche ausgebildet ist, auf der Grundlage der Vielzahl Sensordaten ein semantisches Modell der aktuellen Umgebung des Transportroboters zu bestimmen. Gemäß einer Ausführungsform kann Bestimmung des semantischen Modells der aktuellen Umgebung des Transportroboters fortlaufend in gewissen Zeitabständen erfolgen.

Die Prozessoreinrichtung der Datenverarbeitungsvorrichtung gemäß dem ersten Aspekt ist ferner ausgebildet, auf der Grundlage eines Arbeitsauftrags für den Transportroboter und auf der Grundlage des semantischen Modells der aktuellen Umgebung des Transportroboters, Steuersignale für den Transportroboter zur Durchführung des Arbeitsauftrags zu erzeugen.

Gemäß einer Ausführungsform, bei welcher die Datenverarbeitungsvorrichtung gemäß dem ersten Aspekt beispielsweise als eine externe Servervorrichtung ausgebildet ist, kann die Kommunikationsschnittstelle ferner ausgebildet sein, die Steuersignale für den Transportroboter zur Durchführung des Arbeitsauftrags an den Transportroboter zu übertragen, beispielweise über ein drahtloses oder kabelgebundenes Kommunikationsnetzwerk.

In einer Ausführungsform, bei welcher die Datenverarbeitungsvorrichtung gemäß dem ersten Aspekt beispielsweise als eine externe Servervorrichtung ausgebildet ist, kann die Kommunikationsschnittstelle ferner ausgebildet sein, den Arbeitsauftrag von dem Transportroboter zu empfangen.

Gemäß einer Ausführungsform kann der von der Kommunikationsschnittstelle empfangene Arbeitsauftrag auf einer Spracheingabe basieren und/oder in Form eines Sprachsignals vorliegen, das auf einer Spracheingabe basiert.

In einer Ausführungsform ist die Prozessoreinrichtung der Datenverarbeitungsvorrichtung gemäß dem ersten Aspekt ausgebildet, ein erstes neuronales Netz (d.h. ein erstes künstliches neuronales Netzwerk) zu implementieren, wobei das erste neuronale Netz ausgebildet ist, auf der Grundlage des Arbeitsauftrags für den Transportroboter und auf der Grundlage des semantischen Modells der aktuellen Umgebung des Transportroboters, die Steuersignale für den Transportroboter zur Durchführung des Arbeitsauftrags zu erzeugen.

Gemäß einer Ausführungsform ist das erste neuronale Netz ausgebildet, den Arbeitsauftrag für den Transportroboter in mindestens einen atomaren Teilarbeitsauftrag für den Transportroboter aufzuteilen und auf der Grundlage des mindestens einen atomaren Teilarbeitsauftrages für den Transportroboter und auf der Grundlage des semantischen Modells der aktuellen Umgebung des Transportroboters, die Steuersignale für den Transportroboter zur Durchführung des mindestens einen atomaren Teilarbeitsauftrags zur Erledigung des Arbeitsauftrags zu erzeugen.

In einer Ausführungsform umfasst das erste neuronale Netz ein Large Language Model, LLM. Das Large Language Model, LLM, stellt einen Transformer dar, der bevorzugt menschliche Sprache verarbeiten und auf diese in menschlicher Sprache reagieren kann.

Gemäß einer Ausführungsform ist die Prozessoreinrichtung der Datenverarbeitungsvorrichtung gemäß dem ersten Aspekt ferner ausgebildet, ein zweites neuronales Netz (d.h. ein zweites künstliches neuronales Netzwerk) zu implementieren, wobei das zweite neuronale Netz ausgebildet ist, auf der Grundlage der Vielzahl von Sensordaten das semantische Modell der aktuellen Umgebung des Transportroboters zu bestimmen.

In einer Ausführungsform ist das zweite neuronale Netz ausgebildet, auf der Grundlage der Vielzahl von Sensordaten das semantische Umgebungsmodell aus einer Vielzahl von hinterlegten, d.h. vordefinierten semantischen Umgebungsmodellen auszuwählen, um das semantische Umgebungsmodell zu bestimmen.

Gemäß einer Ausführungsform umfasst das zweite neuronale Netz ein Transformer-Modell. Das Transformer-Modell stellt bevorzugt ein Verständnismodell dar, das die vorgefundene Szene und somit die aktuelle Umgebung interpretiert.

In einer Ausführungsform können die für den Transportroboter zur Durchführung des Arbeitsauftrags erzeugten Steuersignale eine Trajektorie des Transportroboters und/oder einen Behavior Tree und/oder eine State Machine zur Steuerung des Transportroboters definieren bzw. umfassen.

Gemäß einem zweiten Aspekt der Erfindung wird die vorstehend genannte Aufgabe durch ein nachstehend näher beschriebenes System zum Betreiben einer Vielzahl von Transportrobotern gelöst. Das System gemäß dem zweiten Aspekt umfasst eine Vielzahl von Transportrobotern, insbesondere von zumindest teilautomatisierten Flurförderzeugen, sowie eine Datenverarbeitungsvorrichtung gemäß dem ersten Aspekt der Erfindung, beispielsweise in Form einer Servervorrichtung, zum Steuern der Vielzahl von Transportrobotern, beispielsweise in einem Warenlager.

In einer Ausführungsform umfasst jeder der Vielzahl von Transportrobotern eine oder mehrere Sensoreinheiten, welche ausgebildet sind, zumindest einen Teil der Vielzahl von Sensordaten zu erfassen.

Gemäß einer Ausführungsform können die eine oder mehreren Sensoreinheiten eines Transportroboters wenigstens ein Mikrofon umfassen, welches ausgebildet ist, eine Spracheingabe zu erfassen, wobei eine Kommunikationsvorrichtung des Transportroboters ausgebildet ist, ein auf der Sprachengabe basierendes Sprachsignal und/oder einen auf der Sprachengabe basierenden Arbeitsauftrag an die Datenverarbeitungsvorrichtung zu übertragen.

In einer Ausführungsform umfasst die Vielzahl von Transportrobotern ein oder mehrere Flurförderzeuge, insbesondere einen oder mehrere Gabelstapler.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer Datenverarbeitungsvorrichtung zum Steuern einer Vielzahl von Transportrobotern zum Transport von Warenobjekten in einem Warenlager gemäß einer Ausführungsform;
Figur 2 eine schematische Darstellung eines Flurförderzeugs zum Transport von Warenobjekten in einem Warenlager gemäß einer Ausführungsform;
Figur 3 eine schematische Darstellung von Verarbeitungsschritten und Komponenten einer Datenverarbeitungsvorrichtung zum Steuern einer Vielzahl von Transportrobotern zum Transport von Warenobjekten in einem Warenlager gemäß einer Ausführungsform; und
Figur 4 eine schematische Darstellung von Komponenten einer Datenverarbeitungsvorrichtung zum Steuern einer Vielzahl von Transportrobotern zum Transport von Warenobjekten in einem Warenlager gemäß einer Ausführungsform.

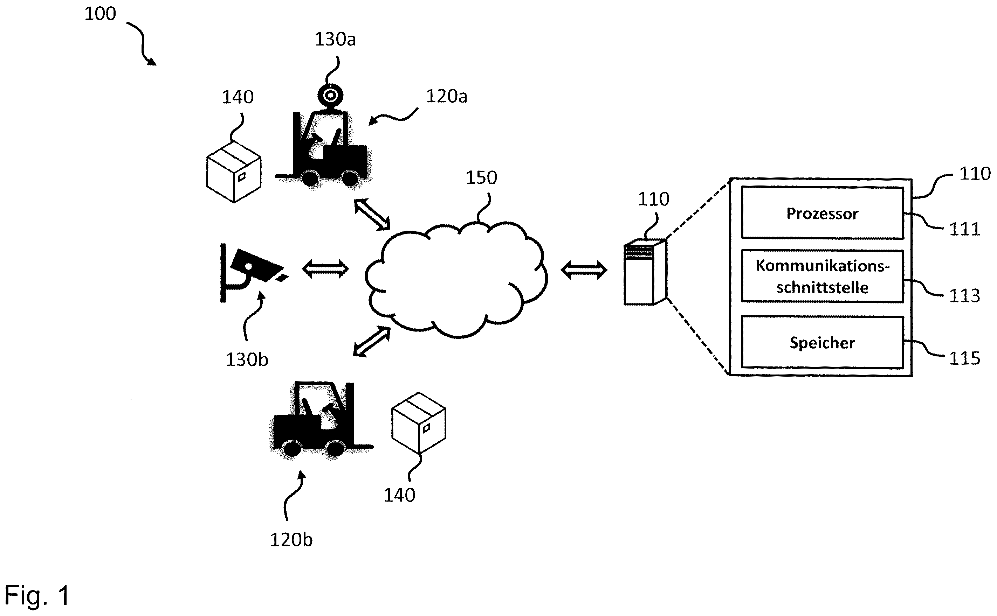

Figur 1 zeigt eine schematische Darstellung eines erfindungsgemäßen Systems 100 mit einer erfindungsgemäßen Datenverarbeitungsvorrichtung 110 zum Steuern einer Vielzahl von zumindest teilweise automatisiert betreibbaren Transportrobotern 120a,b in Form von mobilen Flurförderzeugen 120a,b, beispielsweise einem Gabelstapler oder einem Picker in einem industriellen Umfeld, insbesondere in einem Warenlager mit einer Vielzahl von Warenobjekten und/oder Ladungsträgern 140a,b, beispielsweise Paletten 140a,b. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 1 dargestellt, umfasst die Datenverarbeitungsvorrichtung 110 einen Prozessor 111, eine Kommunikationsschnittstelle 113 und einen, insbesondere nichtflüchtigen, Speicher 115. Der Speicher 115 kann ausgebildet sein, Daten und ausführbaren Programmcode zu speichern, der, wenn von dem Prozessor 111 der Datenverarbeitungsvorrichtung 110 ausgeführt, den Prozessor 111 veranlasst, die im Folgenden beschriebenen Funktionen, Operationen und Verfahren durchzuführen.

Wie in Figur 1 dargestellt, umfasst das System 100 ferner eine Vielzahl von Sensoren 130a,b, welche ausgebildet sind, Sensordaten in dem Warenlager und der Umgebung der Vielzahl von Transportrobotern 120a,b, insbesondere mobilen Flurförderzeugen 120a,b zu erfassen und an die Datenverarbeitungsvorrichtung 110 zu übertragen. Die Vielzahl von Sensoren 130a,b können eine Vielzahl von bildgebenden Sensoren, insbesondere Kameras 130a,b umfassen, die in dem industriellen Umfeld, insbesondere dem Warenlager und/oder an der Vielzahl von mobilen Flurförderzeugen 120a und/oder Transportrobotern angebracht sind. Alternativ oder zusätzlich können die Vielzahl von Sensoren z.B. an den Flurförderzeugen montierten Radar- und/oder Lidar-Sensoren oder auch Mikrofone zur Erfassung von akustischen Daten, beispielsweise Spracheingaben bzw. Sprachsignalen umfassen.

In einer Ausführungsform ist die Kommunikationsschnittstelle 113 der Datenverarbeitungsvorrichtung 110 ausgebildet, drahtlos und/oder drahtgebunden die Vielzahl von Sensordaten von den Sensoren 130a,b zu empfangen und/oder mit den Transportrobotern bzw. mobilen Flurförderzeugen 120a,b und/oder zu kommunizieren. Beispielsweise kann die Kommunikationsschnittstelle 113 der Datenverarbeitungsvorrichtung 110 ausgebildet sein, über ein Kommunikationsnetzwerk 150, z.B. ein kabelgebundenes Kommunikationsnetzwerk oder drahtloses Kommunikationsnetzwerk, beispielsweise ein WLAN, 5G-Netzwerk und/oder das Internet, die Vielzahl von Sensordaten von den Sensoren 130a,b zu empfangen und/oder mit den Transportrobotern bzw. mobilen Flurförderzeugen 120a,b zu kommunizieren, um Daten auszutauschen.

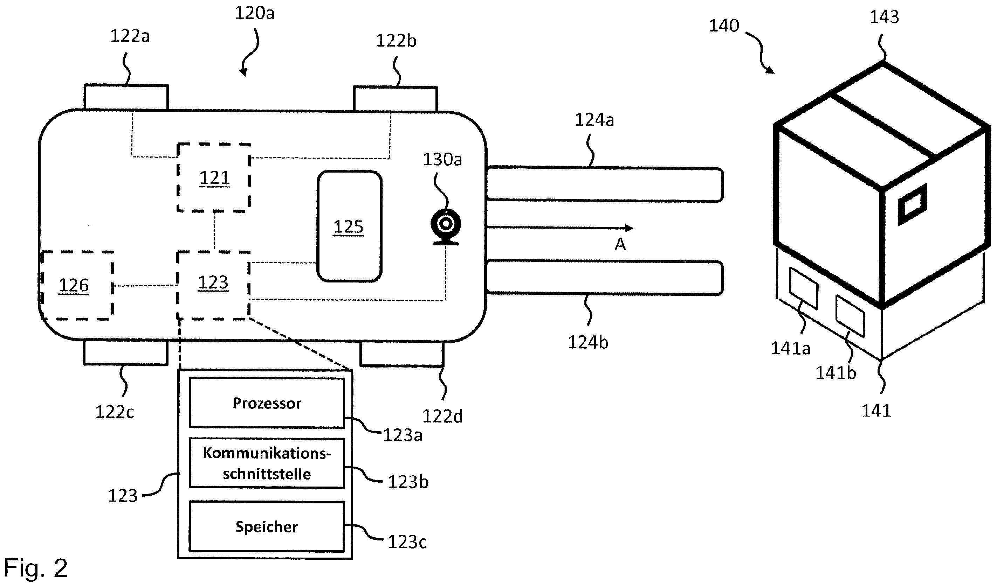

Figur 2 zeigt eine schematische Darstellung eines Transportroboters 120a in Form eines Flurförderzeugs 120a gemäß einer Ausführungsform zum Transportieren von Warenobjekten 140 in einem industriellen Umfeld, insbesondere einem Warenlager. Bei dem Transportroboter 120a in Form eines Flurförderzeugs 120a kann es sich insbesondere um einen zeitweise autonom, teil-autonom und/oder manuell betreibbaren, d.h. von einem Bediener geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 2 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, den Transportroboter 120a in Form eines Flurförderzeugs 120a und das Paar von Lastgabeln 124a,b relativ zu dem Warenobjekt 140 zu bewegen, um beispielsweise die Orientierung und/oder den Abstand zwischen dem Flurförderzeug 120a und der Warenobjekt 140, insbesondere dem Ladungsträger 141 zu ändern und/oder das Paar von Lastgabeln 124a,b anzuheben oder abzusenken. Zu diesem Zweck kann, wie in Figur 2 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a kann ferner eine oder mehrere Sensoreinheiten 130a zur Erfassung von Sensordaten umfassen, welche Informationen über die aktuelle Umgebung des Flurförderzeugs 120a enthalten. In einer Ausführungsform können die Sensoreinheiten 130a, eine Bilderfassungseinheit, insbesondere eine Kamera, einen Radar-Sensor und/oder einen Lidar-Sensor umfassen, welche ausgebildet sind, bei der Bewegung des Flurförderzeugs 120a eine Vielzahl von Bilddaten, Radardaten und/oder Lidardaten der Umgebung des Flurförderzeugs 120a zu erfassen. Ferner kann das Flurförderzeug 120a eine Sensoreinheit 130a in Form eines Mikrofons aufweisen, welches ausgebildet, Spracheingaben zu erfassen.

Wie in Figur 2 angedeutet, kann die Sensoreinheit 130a beispielsweise in Form einer Bilderfassungseinheit 130a vorzugsweise derart an dem Flurförderzeug 120a montiert sein, dass ein Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Erfindungsgemäß umfasst das Flurförderzeug 120a ferner eine Datenverarbeitungsvorrichtung 123 (hierin auch als Steuereinheit 123 bezeichnet), welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 2 dargestellt, kann die Datenverarbeitungsvorrichtung bzw. Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Datenverarbeitungsvorrichtung bzw. Steuereinheit 123 ausgeführt, den Prozessor 123a veranlasst, die im Folgenden beschriebenen Funktionen, Operationen und Verfahren durchzuführen.

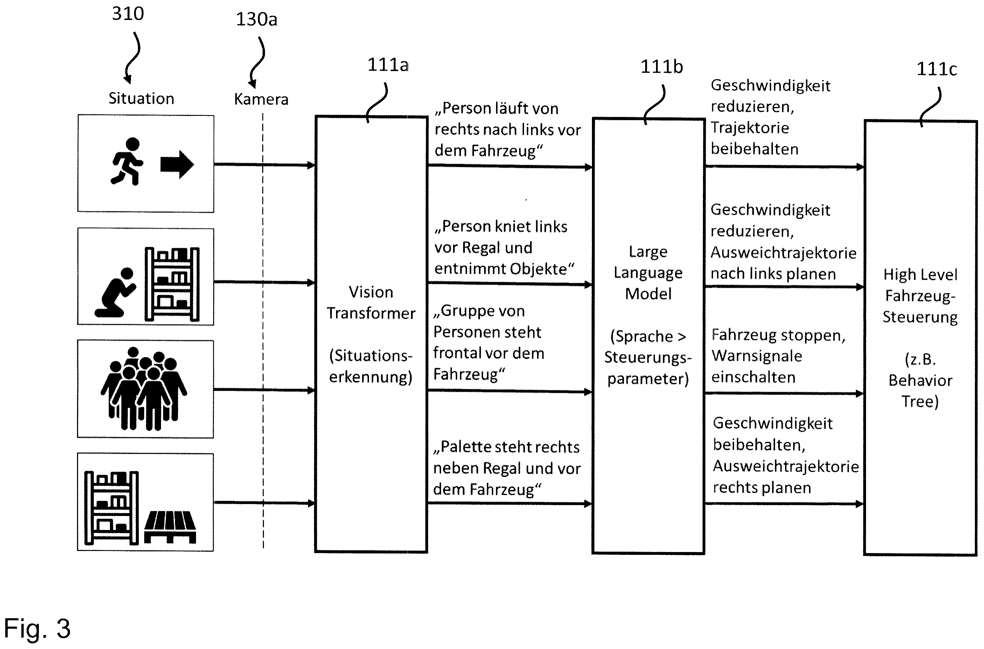

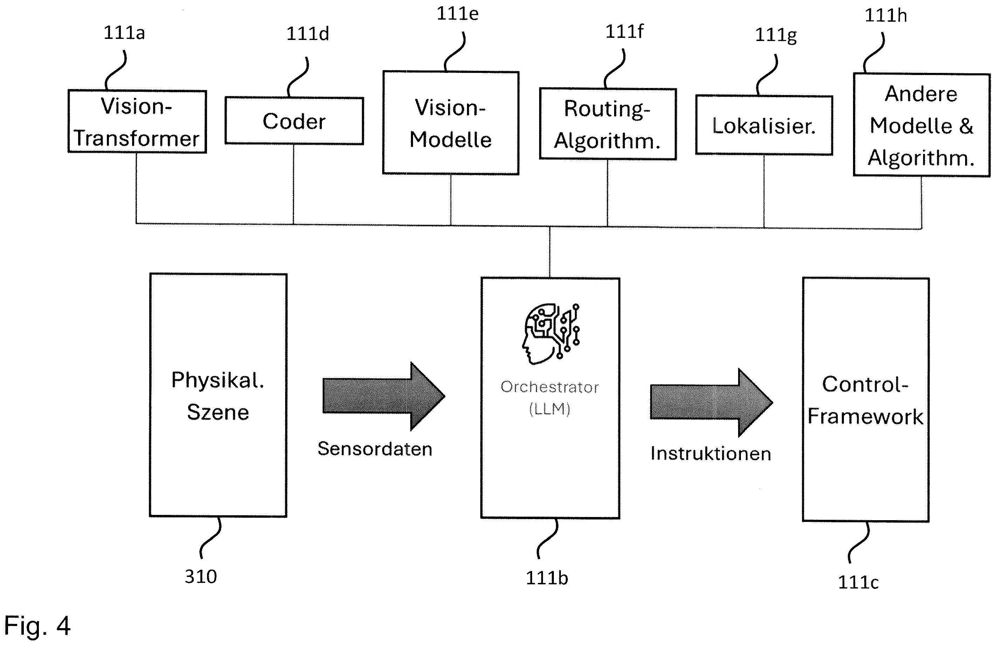

Im Folgenden werden Ausführungsformen der Datenverarbeitungsvorrichtung 110 in Form einer externen Servervorrichtung 110 unter weiterer Bezugnahme auf die Figuren 3 und 4 im Detail beschrieben. Es versteht sich, dass zumindest einige der im Zusammenhang mit der externen Servervorrichtung 110 beschriebenen Ausführungsformen auch durch die in Form einer Steuereinheit 123 ausgebildeten Datenverarbeitungsvorrichtung 123 des Flurförderzeugs 120a implementiert werden können.

Wie bereits vorstehend im Zusammenhang mit Figur 1 beschrieben, ist die Kommunikationsschnittstelle 113 der Datenverarbeitungsvorrichtung 110 ausgebildet, eine Vielzahl von Sensordaten zu empfangen, welche Informationen über die aktuelle Umgebung des Flurförderzeugs 120a enthalten. In einer Ausführungsformen können die Sensordaten insbesondere in der Umgebung des Flurförderzeugs 120a erfasste Bilddaten oder Radar- bzw. Lidar-Daten umfassen. Die Sensordaten können zumindest teilweise von der Sensoreinheit 130a des Flurförderzeugs 120a erfasst werden und an die Datenverarbeitungsvorrichtung 110 übertragen werden.

Die Prozessoreinrichtung 111 der Datenverarbeitungsvorrichtung 110 ist ausgebildet, auf der Grundlage der Vielzahl Sensordaten ein semantisches Modell der aktuellen Umgebung des Flurförderzeugs 120a zu bestimmen. Gemäß einer Ausführungsform kann die Bestimmung des semantischen Modells der aktuellen Umgebung des Flurförderzeugs fortlaufend in gewissen Zeitabständen und/oder in Reaktion auf einen Positionswechsel des Flurförderzeugs 120a erfolgen. In Figur 3 sind schematisch mehrere unterschiedliche aktuelle Umgebungen bzw. Situationen 310 des Flurförderzeugs 120a dargestellt, die von der als Kamera 130a ausgebildeten Sensoreinheit 130a des Flurförderzeugs erfasst werden, um die so erzeugten Sensordaten, welche Informationen über die aktuelle Umgebung 310 des Flurförderzeugs 120a enthalten, an die Datenverarbeitungsvorrichtung 110 zu übertragen. Wie in Figur 3 dargestellt, kann ein von der Prozessoreinrichtung 111 der Datenverarbeitungsvorrichtung 110 implementiertes neuronales Netz 111a in Form eines Transformer-Modells ausgebildet sein, auf der Grundlage der Vielzahl von Sensordaten der aktuellen Umgebung des Flurförderzeugs 120a das semantische Modell der aktuellen Umgebung des Flurförderzeugs zu bestimmen. In einer Ausführungsform ist das neuronale Netz 111a in Form des Transformer-Modells 111a ausgebildet, auf der Grundlage der Vielzahl von Sensordaten das semantische Umgebungsmodell aus einer Vielzahl von hinterlegten, d.h. vordefinierten semantischen Umgebungsmodellen auszuwählen, um das semantische Umgebungsmodell zu bestimmen. Wie in Figur 3 dargestellt, können die semantischen Umgebungsmodelle zum Beispiel umfassen: "Person läuft von rechts nach links vor dem Fahrzeug"; "Person kniet links vor Regal und entnimmt Objekte"; "Gruppe von Personen steht frontal vor dem Fahrzeug", "Palette steht rechts neben dem Regal und vor dem Fahrzeug". Geeignete Transformer-Modelle 111a werden beispielsweise beschrieben in Vaswani, A., Shazeer, N., Parmar, N., Uszkoreit, J., Jones, L., Gomez, A. N., & Polosukhin, I. (2017). Attention is all you need. Advances in neural information processing systems, 30.

Die Prozessoreinrichtung 111 der Datenverarbeitungsvorrichtung 110 ist ferner ausgebildet, auf der Grundlage eines Arbeitsauftrags für das Flurförderzeug 120a und auf der Grundlage des semantischen Modells der aktuellen Umgebung des Flurförderzeugs 120a, Steuersignale für das Flurförderzeug 120a zur Durchführung des Arbeitsauftrags zu erzeugen, um die Steuersignale für das Flurförderzeug 120a zur Durchführung des Arbeitsauftrags an das Flurförderzeug 120a zu übertragen, beispielweise über die Kommunikationsschnittstelle 113 und das drahtlose Kommunikationsnetzwerk 150. In einer Ausführungsform kann die Kommunikationsschnittstelle 113 der Datenverarbeitungsvorrichtung 110 in Form der Servervorrichtung 110 ausgebildet sein, den Arbeitsauftrag von dem Transportroboter zu empfangen. Dabei kann der von der Kommunikationsschnittstelle 113 empfangene Arbeitsauftrag auf einer Spracheingabe basieren und/oder in Form eines Sprachsignals vorliegen, das auf einer Spracheingabe basiert. Alternativ kann der Arbeitsauftrag von einem Warenverwaltungssystem bereitgestellt werden.

Wie in Figur 3 ferner dargestellt, kann ein von der Prozessoreinrichtung 111 der Datenverarbeitungsvorrichtung 110 implementiertes weiteres neuronales Netz 111b in Form eines Large Language Models, LLMs, ausgebildet sein, wobei das LLM 111b ausgebildet ist, auf der Grundlage des Arbeitsauftrags für das Flurförderzeug 120a und auf der Grundlage des von dem neuronalen Netz 111a bestimmten semantischen Modells der aktuellen Umgebung des Flurförderzeugs 120a, die Steuersignale für das Flurförderzeug 120a zur Durchführung des Arbeitsauftrags zu erzeugen.

Gemäß einer Ausführungsform ist das LLM 111b ausgebildet, den Arbeitsauftrag für das Flurförderzeug 120a in mindestens einen atomaren Teilarbeitsauftrag für das Flurförderzeug 120a aufzuteilen und auf der Grundlage der mindestens einen atomaren Teilarbeitsauftrages für den Transportroboter und auf der Grundlage des semantischen Modells der aktuellen Umgebung des Transportroboters, die Steuersignale für den Transportroboter zur Durchführung der mindestens einen atomaren Teilarbeitsauftrages zur Erledigung des Arbeitsauftrags zu erzeugen. In einer Ausführungsform können die für das Flurförderzeug zur Durchführung des Arbeitsauftrags erzeugten Steuersignale eine Trajektorie des Flurförderzeugs 120a und/oder einen Behavior Tree und/oder eine State Machine zur Steuerung des Flurförderzeugs 120 definieren bzw. umfassen, die von einer von der Prozessoreinrichtung 111 implementierten Fahrzeugsteuerung 111c bereitgestellt werden. Die Erstellung von Behavior Trees mittels LLMs wird beispielsweise beschrieben in Izzo, R. A., Bardaro, G., & Matteucci, M. (2024). BTGenBot: Behavior Tree Generation for Robotic Tasks with Lightweight LLMs. arXiv preprint arXiv:2403.12761.

Wie dies in Figur 3 schematisch dargestellt, können die auf der Grundlage des Arbeitsauftrags für das Flurförderzeug 120a und auf der Grundlage des entsprechenden semantischen Modells 310 der aktuellen Umgebung des Flurförderzeugs 120a bestimmten Steuersignale für das Flurförderzeug zum Beispiel die folgenden Instruktionen kodieren: "Geschwindigkeit reduzieren, Trajektorie beibehalten"; "Geschwindigkeit reduzieren, Ausweichtrajektorie nach links planen", "Fahrzeug stoppen, Warnsignale einschalten"; "Geschwindigkeit beibehalten, Ausweichtrajektorie rechts planen".

Die hierin beschriebenen Ausführungsformen ermöglichen, dass sich die Flurförderzeuge 120a,b in Umgebungen mit menschlichen Mitarbeitern dynamisch auf Ereignisse reagieren können und sich an den Arbeitsfluss der Mitarbeiter anpassen können. Wie bereits vorstehend beschrieben, kann hierzu beispielsweise das Flurförderzeug 120a über seine Sensoreinheiten 130a dessen Umfeld erfassen. Diese Sensordaten werden der Datenverarbeitungsvorrichtung 110 bereitgestellt und von der Prozessoreinrichtung 111, wie vorstehend beschrieben, bewertet bzw. weiterverarbeitet.

Wie dies in Figur 4 schematisch dargestellt ist, kann gemäß einer Ausführungsform das von der Prozessoreinrichtung 111 der Datenverarbeitungsvorrichtung 110 implementierte LLM 111b ausgebildet sein, die für die Weiterverarbeitung und/oder für die Bewertung der Sensordaten erforderlichen Modelle und/oder Algorithmen selbstständig auszuwählen, um weitere Aggregationsschritte mit den Sensordaten vornehmen zu können, die zur Bewertung benötigt werden. Beispielsweise kann das LLM 111b, wie in Figur 4 dargestellt, das Transformer-Modell 111a, einen Coder 111d, Vision-Modelle 111e, einen Routing-Algorithmen 111f, ein Lokalisierungsmodul 111g, oder andere Modelle und Algorithmen 111h heranziehen, mit denen das LLM 111b kommuniziert. Wie bereits vorstehend beschrieben, können die Modelle bzw. Algorithmen, die von dem LLM 111b herangezogen werden können, in zwei Teilbereiche unterteilt werden, wobei die Modelle des ersten Teilbereiches dazu dienen, Informationen aus dem Umfeld 310 (Sensordaten, wie Laserscans, Kamera, Radar, Ultraschall) entgegenzunehmen und diese für das LLM 111b aufzubereiten. Das LLM 111b trifft dabei zentrale Entscheidungen, wie mit einer gegebenen, physikalischen Situation umgegangen werden soll. Modelle des zweiten Teilbereiches können die getroffenen Entscheidungen aufbereiten, um diese der Steuerungsschicht (Fahrzeugsteuerung 111c) des Flurförderzeugs 120a übergeben zu können. So kann das Flurförderzeug auf unterschiedliche Hindernisse, die unterschiedlichen semantische Umgebungsmodelle repräsentieren, unterschiedlich reagieren. Bei Menschen wird die Geschwindigkeit reduziert und bei einer Palette kann das Ausweichen mit angepasster Trajektorie und veränderter Geschwindigkeit erfolgen. So kann das automatisierte Flurförderzeug 120a besser in menschliche Arbeitsprozesse integriert werden.

Ferner ist das Flurförderzeug 120a gemäß den hierin beschriebenen Ausführungsformen flexibler in der Abarbeitung von Arbeitsaufträgen. So kann das LLM 111b dazu genutzt werden, ein Verständnis für menschliche Sprache bereitzustellen. Das befähigt das System 100 Arbeitsaufträge direkt von Menschen entgegenzunehmen und diese in atomare Teilaufträge (z.B. Palettenaufnahme, Transport an einen bestimmten Zielort, Einlagern in ein bestimmtes Regalfach) zu zerlegen, die von dem Flurförderzeug 120a umgesetzt werden können. Auch Signale anderer Fahrzeuge oder Arbeitsaufträge durch IT-Systeme (z.B. WMS) können kombiniert oder integriert werden.

Wie bereits vorstehend beschrieben, kann die Kommunikation mit einer Steuerungsschicht des Flurförderzeugs 120a z.B. über Behaviour Trees erfolgen, welche durch das LLM 111b erzeugt werden. Darüber hinaus kann ein neu eingebrachter Arbeitsauftrag flexibel in eine bestehende Auftragsliste integriert werden. Falls im Verlauf der Auftragsabarbeitung ein neuer, zusätzlicher Arbeitsauftrag eingeht, so kann das LLM 111b darauf reagieren, indem die neuen Informationen verarbeitet werden, wie oben beschrieben, und ein neuer Behaviour Tree erzeugt wird.

Durch die Berücksichtigung des semantischen Szenenverständnisses bei der Steuerung von automatisierten Flurförderzeugen 120a,b in der Intralogistik ist eine flexible Anpassung an individuelle und sich dynamische ändernde Fahrsituationen im Lager oder in der Fabrik möglich. Dadurch ergeben sich folgende Vorteile für die Fahrzeugsteuerung: flexible Reaktion auf Menschen und ihre Verhaltensweisen in Begegnungssituationen; Anpassung der Fahrzeugsteuerung an sich verändernde Umgebungsbedingungen und -karten; Erkennung im Weg platzierter Ladungsträger oder Güter (Hindernis) und Anpassung des Fahrverhaltens.

Durch die Anpassungsfähigkeit des Flurförderzeugs auf sich ändernde Szenen und Umgebungen wird die Akzeptanz bei Mitarbeitern gesteigert. Die Flurförderzeuge können umgebungsabhängig explizite und implizite Verkehrsregeln, sowie menschliche Verhaltensweisen erlernen und berücksichtigen.

Die Fähigkeit zur Aufnahme neuer Aufträge durch natürliche Sprache und zur Änderung von Arbeitsaufträgen im Prozessablauf durch die flexible Erzeugung von Behaviour Trees durch das LLM 111b ermöglicht eine flexible Anpassung bei der Auftragsbearbeitung, z.B. können neue Aufträge durch menschliche Sprache, auch in Kombination mit Signalen anderer Fahrzeuge oder von IT-Systemen (z.B. WMS) hinzugefügt werden und/oder Arbeitsaufträgen während bereits Aufträge bearbeitet werden hinzugefügt oder umpriorisiert werden.

## Patentansprüche

1. Datenverarbeitungsvorrichtung (110; 123) zum Steuern eines Transportroboters (120a,b), insbesondere Flurförderzeugs (120a,b), wobei die Datenverarbeitungsvorrichtung (110; 123) umfasst:
eine Kommunikationsschnittstelle (113; 123b), welche ausgebildet ist, eine Vielzahl von Sensordaten zu empfangen, welche Informationen über die Umgebung des Transportroboters (120a,b) enthalten; und
eine Prozessoreinrichtung (111; 123a), welche ausgebildet ist, auf der Grundlage der Vielzahl Sensordaten ein semantisches Modell der Umgebung des Transportroboters (120a,b) zu bestimmen,
wobei die Prozessoreinrichtung (111; 123a) ferner ausgebildet ist, auf der Grundlage eines Arbeitsauftrags für den Transportroboter (120a,b) und auf der Grundlage des semantischen Modells der Umgebung des Transportroboters (120a,b), Steuersignale für den Transportroboter (120a,b) zur Durchführung des Arbeitsauftrags zu erzeugen.

2. Datenverarbeitungsvorrichtung (110) nach Anspruch 1, wobei die Kommunikationsschnittstelle (113) ferner ausgebildet ist, die Steuersignale für den Transportroboter (120a,b) zur Durchführung des Arbeitsauftrags an den Transportroboter (120a,b) zu übertragen.

3. Datenverarbeitungsvorrichtung (110) nach Anspruch 1 oder 2, wobei die Kommunikationsschnittstelle (113) ferner ausgebildet ist, den Arbeitsauftrag von dem Transportroboter (120a,b) zu empfangen.

4. Datenverarbeitungsvorrichtung (110) nach Anspruch 3, wobei der von der Kommunikationsschnittstelle (113; 123b) empfangene Arbeitsauftrag auf einer Spracheingabe basiert und/oder in Form eines Sprachsignals vorliegt, das auf einer Spracheingabe basiert.

5. Datenverarbeitungsvorrichtung (110; 123) nach einem der vorhergehenden Ansprüche, wobei die Prozessoreinrichtung (111; 123a) ausgebildet ist, ein neuronales Netz (111b) zu implementieren, wobei das neuronale Netz (111b) ausgebildet ist, auf der Grundlage des Arbeitsauftrags für den Transportroboter (120a,b) und auf der Grundlage des semantischen Modells der Umgebung des Transportroboters (120a,b), die Steuersignale für den Transportroboter (120a,b) zur Durchführung des Arbeitsauftrags zu erzeugen.

6. Datenverarbeitungsvorrichtung (110; 123) nach Anspruch 5, wobei das neuronale Netz (111b) ausgebildet ist, den Arbeitsauftrag für den Transportroboter (120a,b) in mindestens einen Teilarbeitsauftrag für den Transportroboter (120a,b) aufzuteilen und auf der Grundlage des mindestens einen Teilarbeitsauftrages für den Transportroboter (120a,b) und auf der Grundlage des semantischen Modells der Umgebung des Transportroboters (120a,b), die Steuersignale für den Transportroboter zur Durchführung des mindestens einen Teilarbeitsauftrages zu erzeugen.

7. Datenverarbeitungsvorrichtung (110; 123) nach Anspruch 5 oder 6, wobei das neuronale Netz (111b) ein Large Language Model, LLM, umfasst.

8. Datenverarbeitungsvorrichtung (110; 123) nach einem der vorhergehenden Ansprüche, wobei die die Prozessoreinrichtung (111; 123a) ausgebildet ist, ein neuronales Netz (111a) zu implementieren, wobei das neuronale Netz (111a) ausgebildet ist, auf der Grundlage der Vielzahl von Sensordaten das semantische Modell der Umgebung des Transportroboters (120a,b) zu bestimmen.

9. Datenverarbeitungsvorrichtung (110; 123) nach Anspruch 8, wobei das neuronale Netz (111a) ausgebildet ist, auf der Grundlage der Vielzahl von Sensordaten das semantische Umgebungsmodell aus einer Vielzahl von hinterlegten semantischen Umgebungsmodellen auszuwählen, um das semantische Umgebungsmodell zu bestimmen.

10. Datenverarbeitungsvorrichtung (110; 123) nach Anspruch 8 oder 9, wobei das neuronale Netz (111a) ein Transformer-Modell (111a) umfasst.

11. Datenverarbeitungsvorrichtung (110; 123) nach einem der vorhergehenden Ansprüche, wobei die für den Transportroboter (120a,b) zur Durchführung des Arbeitsauftrags erzeugten Steuersignale eine Trajektorie des Transportroboters (120a,b) und/oder einen Behavior Tree und/oder eine State Machine definieren.

12. System (100) zum Betreiben einer Vielzahl von Transportrobotern (120a,b), wobei das System (100) umfasst:
eine Vielzahl von Transportrobotern (120a,b); und
eine Datenverarbeitungsvorrichtung (110) nach einem der Ansprüche 1 bis 10 zum Steuern der Vielzahl von Transportrobotern (120a,b).

13. System (100) nach Anspruch 12, wobei die Vielzahl von Transportrobotern (120a,b) eine Vielzahl von Sensoreinheiten (130a) umfassen, welche ausgebildet sind, zumindest einen Teil der Vielzahl von Sensordaten zu erfassen.

14. System (100) nach Anspruch 13, wobei die Vielzahl von Sensoreinheiten (130a) wenigstens ein Mikrofon umfassen, welches ausgebildet ist, eine Spracheingabe zu erfassen, und wobei eine Kommunikationsvorrichtung (126) des Transportroboters (120a,b) ausgebildet ist, ein auf der Sprachengabe basierendes Sprachsignal und/oder einen auf der Sprachengabe basierenden Arbeitsauftrag an die Datenverarbeitungsvorrichtung (110) zu übertragen.

15. System (100) nach einem der Ansprüche 10 bis 14, wobei die Vielzahl von Transportrobotern (120a,b) ein oder mehrere Flurförderzeuge (120a,b), insbesondere einen oder mehrere Gabelstapler (120a,b) umfassen.
